# EUROPEAN PATENT SPECIFICATION

(11) **EP 0 746 981 B1**
(45) Date of publication and mention of the grant of the patent: **28.08.2002**
(21) Application number: 96303554.8
(22) Date of filing: 20.05.1996
(51) Int. Cl.: A21C 3/06

(54) **Apparatus for rolling up dough pieces**
Vorrichtung zum Aufrollen von Teigteilchen
Dispositif pour l'enroulement de morceaux de pâte

(30) Priority: 19.05.1995 JP 14551795
(43) Date of publication of application: 11.12.1996
(73) Proprietor: RHEON AUTOMATIC MACHINERY CO. LTD., Utsunomiya-shi Tochigi-ken (JP)
(72) Inventor: Kobayashi, Mikio, Utsunomiya-shi, Tochigi-ken (JP); Yoshida, Tsunehiko, Utsunomiya-shi, Tochigi-ken (JP)
(74) Representative: Leale, Robin George

(56) References cited:
- EP-A- 0 673 603
- WO-A-86/02808
- FR-A- 2 546 721

## Description

The present invention relates to apparatus for rolling up dough pieces.

Many prior art rolling up devices are known. For example, a single rolling plate is used, which is spaced a uniform distance from a conveyor and bread dough is supplied to the space for the dough to be rolled. Also, a curl net covered with a cloth is used to cover a predetermined area of a conveying surface of a conveyor. Bread dough is supplied to the space between the curl net and the conveyor and is rolled in the said space.

However, in these known devices bread dough having a nonuniform thickness cannot be rolled into a stick-like form. The thickness of the bread dough may vary due to uneven fermentation of the dough, or foam formed in it. Further, when it is desired to roll the bread dough after first depositing ham or the like on it in an overlapping relationship, the ham slips and moves on the bread dough in the space between the rolling means and the conveyor. Thus these devices cannot satisfactorily roll the bread dough.

Further, if a plurality of rows of bread dough are rolled using a single and unitary dough-rolling plate, the bread dough pieces must have a uniform thickness and the dough must be simultaneously supplied to the rolling plate so that the plate rolls the dough uniformly. Otherwise the dough is rolled non-uniformly and conveyed in an unevenly rolled condition.

WO-A-8602808 discloses apparatus for rolling up dough pieces, comprising a conveyor for dough pieces, a drive shaft extending across the conveyor, a plurality of rotary dough-holding disks mounted on the drive shaft for engaging dough pieces on the conveyor, and a plurality of dough-rolling plates extending lengthwise of the conveyor and adjacent the said dough-holding disks.

The present invention is characterised in that one plate is disposed between each pair of disks, closely adjacent to the disks.

In operation of such an apparatus the dough-rolling plates moderately press the bread dough. Thus the bread dough is securely rolled up, preventing the dough from skidding and slackening.

If ham is placed on the bread dough, then since the dough-holding disks press the bread dough and the ham together to reliably feed them to the dough-rolling plates, and the rolling plates moderately press the bread dough from above, the bread dough is rolled uniformly over its entire length.

An embodiment of the invention will now be described by way of example and with reference to the accompanying drawings, in which:-
Fig. 1 is a plan view of apparatus according to the invention; and
Fig. 2 is a side view illustrating the manner of operation of the apparatus.

Referring to the drawings, a base 2 is mounted on a conveyor frame 1. A shaft 3 is supported by the base 2. Disks 4 are connected to the shaft 3 close to the opposite ends thereof. A belt 41, which is circular in cross section, is wound around each of the disks 4. The belts 41 are in a pressing relationship to the conveyor belt 11. Thus the disks 4 are rotated by the conveyor belt 11 via the belts 41 as the conveyor belt 11 advances.

A plurality of dough-holding circular disks 5 are mounted on the shaft 3 at equal intervals. The dough-holding disks 5 have a diameter which is less than that of the disks 4. Around each of the dough-holding disks 5 a belt 51 that is circular in cross section is wound. A small space exists between the belts 51 and the conveyor belt 11, so that they do not contact each other.

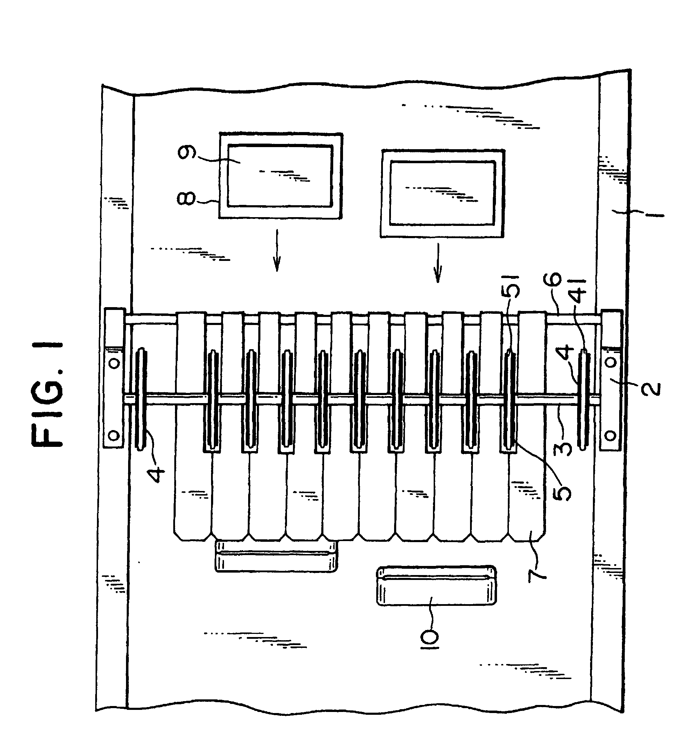

As shown in Fig. 1, a plurality of dough-rolling plates 7 are rotatably mounted on a shaft 6 which is supported by the base 2. The plates 7 are located close to each other.

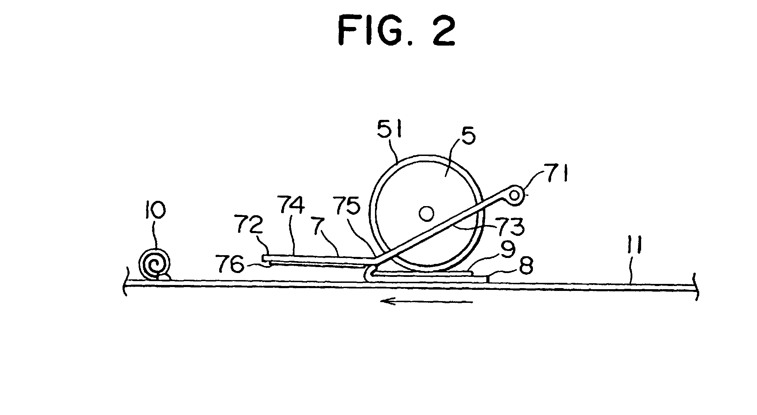

The dough-rolling plates 7 are located between the dough-holding disks 5. As seen in Fig. 2, the dough-holding plates 7 are formed with a supporting portion 71 and a free end 72. The plates 7 include inclined portions 73, and horizontal portions 74 that extend toward the free end 72, such portions meeting at a corner 75.

Reference numeral 8 denotes a rectangular piece of bread dough carried by the conveyor belt 11, one straight side of the dough being positioned at right angles to the advancing direction of the conveyor belt. A piece of ham 9 is placed on the bread dough 8.

Slip-preventing members 76 are fixed to the lower surface of the dough-rolling plates 7 to increase the rolling friction between the plates 7 and the bread dough 8.

The rolling-up operation of stick-like bread will now be explained. When the conveyor belt 11 advances, the disks 4 are rotated. Thus the dough-holding disks 5 are also rotated. The bread dough 8 and the ham 9 being conveyed are gripped between the dough-holding disks 5 and the conveyor belt 11 so as to be forcibly conveyed in the downstream direction. In due course the leading edge of the bread dough 8 contacts the corner 75 of the rolling plate 7. At this time the rolling-up operation of the bread dough 8 starts, and rolled-up dough 10 is formed.

In more detail, the rolling-up operation of the bread dough 8 is performed in the area extending from the corner 75 to the free end of the rolling plate 7. While this operation is being performed the bread dough 8 is forcibly gripped between the dough-holding disks 5 and the conveyor belt 11 to convey the bread dough 8 downstream. Thus, at the beginning of the rolling-up operation, when the bread dough 8 contacts the angled portion 75, the bread dough 8 does not slip on the conveyor belt 11 and it can be securely rolled up from its leading end. In the prior art bread dough rolling-up operation, all parts of the dough could not be consistently and simultaneously rolled up in the longitudinal direction, but the dough was often rolled up diagonally, or rolled up such that separation of the ham from the bread dough took place.

In this embodiment the width of each rolling plate 7 between the corner 75 and the free end 72 is made narrow, and each of the rolling plates 7 is independently located. This contrasts with the prior art rolling-up apparatus wherein only a single and unitary rolling plate was used in the longitudinal direction of a piece of dough to be rolled. In the present embodiment, since a plurality of separate rolling plates 7 are provided to press the bread dough 8 from above, the bread dough is evenly rolled up along its entire length.

When a single and unitary rolling plate having a broad width is used for rolling up the bread dough as in the prior art apparatus, then if the bread dough does not have a uniform thickness the thick portion of the dough is rolled up to be thicker than the thin portion of the dough. This causes the dough to be twisted, and the ends of the rolled-up dough are not uniform, or only the part of the dough near one of its ends is rolled. This is a disadvantage of the prior art which is overcome by the present embodiment.

## Claims

1. An apparatus for rolling up dough pieces (8), comprising a conveyor (11) for dough pieces, a drive shaft (3) extending across the conveyor, a plurality of rotary dough-holding disks (5) mounted on the drive shaft for engaging dough pieces on the conveyor, and a plurality of dough-rolling plates (7) extending lengthwise of the conveyor and adjacent the said dough-holding disks;
**characterised in that** one plate (7) is disposed between each pair of disks (5), closely adjacent to the disks.

2. Apparatus as claimed in claim 1, wherein the said dough-rolling plates (7) alternate with the said dough-holding disks (5) across the conveyor.

3. Apparatus as claimed in claim 1 or 2, wherein the lateral edges of the said dough-rolling plates (7) adjoin each other downstream of the said dough-holding discs (5) so as to form a substantially continuous composite dough-rolling surface extending transversely of the conveyor.

4. Apparatus as claimed in any of claims 1 to 3, wherein each of the said dough-rolling plates (7) is pivotally mounted on a shaft at its upstream end, the plate having a downwardly inclined upstream portion (73) and a horizontal downstream portion (74) terminating in a free end (72).

5. Apparatus as claimed in claims 3 and 4, wherein the said horizontal downstream portions (74) of the dough-rolling plates (7) have their lateral edges adjoining as aforesaid, the said dough-rolling disks (5) being disposed between the said downwardly inclined portions (73) of the plates.

## Patentansprüche

1. Vorrichtung zum Aufrollen von Teigstücken (8) mit einem Förderer (11) für Teigstücke, einer sich quer über den Förderer erstreckenden Antriebswelle (3), einer Mehrzahl von rotierbaren Teighalterscheiben (5), die zum Ergreifen von Teigstücken auf dem Förderer auf der Antriebswelle angebracht sind, und einer Mehrzahl von Teigaufrollplatinen (7), die sich den Teighalterscheiben benachbart in Längsrichtung des Förderers erstrecken, **dadurch gekennzeichnet, daß** eine Platine (7) zwischen jedem Paar von Scheiben (5) angeordnet ist, und zwar anliegend an den Scheiben.

2. Vorrichtung nach Anspruch 1, bei welcher die Teigaufrollplatinen (7) sich quer über den Förderer mit den Teighalterscheiben (5) abwechseln.

3. Vorrichtung nach Anspruch 1 oder 2, bei welcher die seitlichen Ränder der Teigaufrollplatinen (7) sich stromabwärts von den Teighalterscheiben (5) aneinander anlegen, um eine im wesentlichen kontinuierliche, zusammengesetzte Teigaufrollfläche zu bilden, die sich quer zum Förderer erstreckt.

4. Vorrichtung nach einem der Ansprüche 1 bis 3, bei welcher jede der Teigaufrollplatinen (7) an ihrem stromaufwärtigen Ende an einer Achse angebracht ist, wobei die Platine einen abwärtsgeneigten stromaufwärtigen Abschnitt (73) und einen horizontalen stromabwärtigen Abschnitt (74) aufweist, welch letzterer mit einem freien Ende (72) abschließt.

5. Vorrichtung nach den Ansprüchen 3 und 4, bei welcher die horizontalen stromabwärtigen Abschnitte (74) der Teigaufrollplatinen (7) in der vorgenannten Weise aneinanderliegende seitliche Ränder aufweisen, während die Teigaufrollscheiben (5) zwischen den stromabwärts geneigten Abschnitten (73) der Platinen angeordnet sind.

## Revendications

1. Appareil pour enrouler des morceaux de pâte (8), comprenant un transporteur (11) pour morceaux de pâte, un arbre d'entraînement (3) s'étendant en travers du transporteur, une pluralité de disques rotatifs de maintien de pâte (5) montés sur l'arbre d'entraînement pour engager les morceaux de pâte sur le transporteur, et une pluralité de plaques d'enroulement de pâte (7) s'étendant dans le sens de la longueur du transporteur et adjacentes auxdits disques de maintien de pâte (5) ;
**caractérisé en ce qu'**une plaque (7) est disposée entre les deux disques de chaque paire (5), en étant étroitement adjacente aux disques.

2. Appareil selon la revendication 1, dans lequel lesdites plaques d'enroulement de pâte (7) alternent avec lesdits disques de maintien de pâte (5) en travers du transporteur.

3. Appareil selon la revendication 1 ou 2, dans lequel les bords latéraux desdites plaques d'enroulement de pâte (7) sont adjacents les uns aux autres en aval desdits disques de maintien de pâte (5) de manière à former une surface d'enroulement de pâte composite sensiblement continue s'étendant transversalement au transporteur.

4. Appareil selon l'une quelconque des revendications 1 à 3, dans lequel chacune desdites plaques d'enroulement de pâte (7) est montée en pivotement sur un arbre à son extrémité d'amont, la plaque comportant une portion d'amont inclinée vers le bas (73) et une portion d'aval horizontale (74) se terminant en une extrémité libre (72).

5. Appareil selon les revendications 3 et 4, dans lequel lesdites portions d'aval horizontales (74) des plaques d'enroulement de pâte (7) ont leurs bords latéraux adjacents comme mentionné ci-dessus, lesdits disques de maintien de pâte (5) étant disposés entre lesdites portions inclinées vers le bas (73) des plaques.
